# FASCICULE DE BREVET EUROPEEN

(11) **EP 3 197 628 B1**
(45) Date de publication et mention de la délivrance du brevet: **06.06.2018**
(21) Numéro de dépôt: 15770501.3
(22) Date de dépôt: 23.09.2015
(51) Int. Cl.: B23K 20/06, H05B 6/36, B23K 101/06

(54) **BOBINE POUR SOUDAGE DE PIÈCES TUBULAIRES PAR IMPULSION MAGNÉTIQUE ET PROCÉDÉ DE SOUDAGE ASSOCIÉ**
SPULE FÜR MAGNETIMPULSSCHWEISSEN VON ROHRFÖRMIGEN TEILEN UND ZUGEHÖRIGES SCHWEISSVERFAHREN
COIL FOR THE MAGNETIC-PULSE WELDING OF TUBULAR PARTS AND RELATED WELDING METHOD

(30) Priorité: 23.09.2014 FR 1458947
(43) Date de publication de la demande: 02.08.2017
(73) Titulaire: ADM28 S.àr.l., 2453 Luxembourg (LU)
(72) Inventeur: AVRILLAUD, Gilles, 31120 PINSAGUEL (FR); CUQ LELANDAIS, Jean-Paul, 31270 CUGNAUX (FR); FERREIRA, Samuel, 31104 Toulouse Cedex 1 (FR)
(74) Mandataire: Ipside
(86) Numéro de dépôt international: PCT/EP2015/071825
(87) Numéro de publication internationale: WO 2016/046252

(56) Documents cités:
- WO-A2-2008/104980
- JP-A- H11 192 562
- US-A- 3 520 049
- US-A1- 2002 003 159

## Description

### Domaine de l'invention

La présente invention concerne le domaine du soudage, et plus particulièrement le domaine du soudage par impulsion magnétique, pour l'assemblage de pièces entre elles de façon permanente. La présente invention porte notamment sur une forme de réalisation améliorée de bobine pour le soudage de pièces tubulaires.

### Etat de la technique

Le document US 3,520,049 divulgue une bobine pour soudage de pièces tubulaires par impulsion magnétique selon le préambule de la revendication 1 et un procédé de soudage selon le préambule de la revendication 5.

Le soudage par impulsion magnétique appartient au domaine des procédés de soudage par impact permettant la réalisation d'une liaison entre deux pièces métalliques par pression l'une contre l'autre au niveau d'une zone de recouvrement. Le principe d'un tel procédé de soudage par impulsion magnétique repose principalement sur l'impact à grande vitesse des pièces grâce à des forces électromagnétiques générées par une bobine.

De manière classique, un système pour mettre en oeuvre un tel procédé de soudage par impulsion magnétique comporte un ou plusieurs condensateurs relié(s) à une bobine pour créer un champ magnétique bref et intense. Le ou les condensateurs serve(nt) au stockage d'une grande quantité d'énergie électrique. Le champ magnétique intense créé est le résultat d'une décharge très rapide de cette énergie électrique dans la bobine.

Pour réaliser le soudage de deux pièces entre elles avec un tel procédé, lesdites deux pièces sont préalablement superposées l'une par rapport à l'autre, au moins sur une zone dite de recouvrement. La bobine est positionnée au niveau de cette zone de recouvrement. La pièce dénommée pièce externe est celle qui est positionnée proche de la bobine, sans être en contact avec celle-ci, et la pièce dénommée pièce interne est celle qui est la plus éloignée de la bobine. Une très grande quantité d'énergie électrique, préalablement stockée dans le ou les condensateurs, est subitement déchargée dans la bobine, sous la forme d'un courant variable de très forte intensité, en un temps très court. A titre d'exemple, certains systèmes peuvent atteindre quelques centaines de milliers d'ampères en quelques microsecondes. Le courant génère un champ magnétique variable entre la bobine et la pièce externe et induit des courants de Foucault dans cette pièce externe. Ces courants de Foucault associés au champ magnétique environnant développent dans la pièce externe des forces volumiques importantes appelées forces de Lorentz. Ces forces engendrent une forte accélération de la pièce externe en direction de la pièce interne. La vitesse de collision de la pièce externe sur la pièce interne peut s'élever à plusieurs centaines de m/s. Lorsque certaines conditions d'impact, notamment l'angle de collision et la vitesse de collision, sont réunies, cet impact génère d'une part un jet de matière qui va nettoyer la surface des deux pièces, et d'autre part une pression qui va rapprocher les atomes des matériaux des deux pièces les uns contre les autres de telle sorte que leurs forces de répulsion naturelles sont vaincues, résultant ainsi en une liaison métallique sans fusion. La paroi de la pièce externe est alors non seulement liée d'un point de vue métallurgique à la paroi de la pièce interne mais a subi également une déformation rémanente.

Un tel procédé de soudage par impulsion magnétique est couramment utilisé pour l'assemblage de pièces tubulaires, via une bobine dite annulaire.

Un avantage d'un tel procédé de soudage par impulsion magnétique réside dans le fait que l'assemblage des deux pièces est effectué à l'état solide, ce qui permet de s'acquitter de tous les problèmes connus du soudage classique impliquant la fusion des matériaux. Les pertes d'énergie sont ainsi minimales et en conséquence les pièces à souder chauffent peu. L'absence de fusion dans les pièces durant le soudage permet ainsi d'assembler des matériaux ayant un point de fusion différent.

Le procédé de soudage par impulsion magnétique présente cependant l'inconvénient de nécessiter des fortes intensités pour souder les pièces entre elles. Le recours à de telles intensités engendre, dans la bobine, des températures et des contraintes importantes, pouvant conduire à des dommages irrémédiables sur la bobine, tels que des fissures ou la fonte de la bobine.

Un autre inconvénient de ce procédé réside également dans la qualité de la soudure réalisée. Un contact entre les deux pièces n'est pas une garantie de soudage.

Pour que le soudage ait lieu, plusieurs paramètres doivent être pris en compte, notamment l'angle de collision et la vitesse de collision. Ces deux paramètres sont liés à l'agencement relatif initial de la bobine et des deux pièces à souder, aux matériaux des pièces et au signal de courant utilisés.

Pour rappel, la vitesse de collision est la vitesse de collision radiale entre les deux pièces. On définit aussi la vitesse du point de collision qui est tangentielle aux pièces. La vitesse de collision et la vitesse du point de collision sont liées par l'angle de collision. Ces vitesse de collision et vitesse de point de collision évoluent lors de l'impact. La vitesse du point de collision peut s'élever à plusieurs milliers de m/s.

L'angle de collision est défini comme l'angle entre les parois des deux pièces lors de la collision. L'angle de collision est dynamique, c'est-à-dire qu'il évolue au cours de la collision, notamment car la pièce externe se déforme de manière non uniforme.

Chaque couple de matériau est défini par une fenêtre de soudage, c'est à dire un ensemble de paramètres (angle de collision, vitesse du point de collision), permettant la réalisation d'une soudure de bonne qualité. La modification de l'un des paramètres peut avoir des conséquences sur la qualité de la soudure. Entre autre, l'angle de collision évoluant au cours de la collision, il est difficile de rester dans la fenêtre de soudage.

### Exposé de l'invention

La présente invention a pour but de remédier à ces inconvénients.

La présente invention a notamment pour but d'apporter une solution efficace permettant de souder des pièces tubulaires, tout en assurant la résistance mécanique de l'article obtenu par une telle soudure et en garantissant une soudure saine.

L'invention concerne ainsi une bobine pour soudage de pièces tubulaires par impulsion magnétique comportant une partie active dont une surface, dite périphérique, est configurée pour et destinée à être positionnée en regard d'une zone de recouvrement des pièces tubulaires entre elles.

Par pièces tubulaires, on entend que les pièces ont la forme d'un tube sur toute ou partie de leur longueur, au moins au niveau de la zone de recouvrement.

Par partie active, on entend une zone de la bobine où se concentre et circule un courant, délivré par une unité de stockage d'énergie électrique, pour créer un champ magnétique au niveau de l'ouverture de la bobine. Une épaisseur de la zone active correspond sensiblement à l'épaisseur de peau. A haute fréquence, le courant circule sur une épaisseur réduite correspondant à l'épaisseur de peau. La fréquence mise en oeuvre dans le soudage par impulsion magnétique est de quelques dizaines de kHz, ce qui correspond par exemple, à une épaisseur de peau de quelques millimètres pour une bobine réalisée dans un matériau en acier.

La surface périphérique définit préférentiellement une zone, où se produira le soudage des pièces tubulaires, sous la forme d'une ouverture tubulaire. Les pièces tubulaires sont destinées à être disposées l'une par rapport l'autre, en formant, au niveau de leur superposition, la zone de recouvrement, puis à être insérées dans l'ouverture tubulaire de la bobine, en vis-à-vis de la surface périphérique de la bobine, pour y être soudées au niveau d'une zone de travail par le champ magnétique généré par la bobine.

La zone de travail est la partie de la zone de recouvrement située en vis-à-vis de la partie active. Ladite zone de travail présente une longueur de travail L_{wz} correspondant à une longueur de soudage maximale entre la pièce interne et la pièce externe.

Ladite ouverture tubulaire est allongée selon une direction axiale, sensiblement équivalente à une direction axiale des pièces tubulaires lorsque lesdites pièces tubulaires sont disposées dans l'ouverture tubulaire de la bobine et bloquées en position par des moyens de fixation. La surface périphérique présente, dans la direction axiale, une longueur axiale donnée.

Selon l'invention, l'ouverture tubulaire présente, dans la direction axiale, une section croissante sur la longueur axiale de la surface périphérique.

La longueur axiale de la surface périphérique est dimensionnée de sorte à permettre la réalisation d'une soudure de longueur prédéfinie entre lesdites pièces. Cette longueur prédéfinie est la longueur de soudage. De préférence, la longueur axiale de la surface périphérique est au moins égale à la longueur de soudage.

Une telle forme de bobine, de part la section évolutive de l'ouverture tubulaire sur la longueur axiale de la surface périphérique de la bobine, permet avantageusement de faire varier un écart entre la bobine et la pièce la plus proche de la surface périphérique de la bobine, dite pièce externe, ce qui modifie les paramètres fondamentaux que sont la vitesse du point de collision et l'angle de collision. Un tel profil d'ouverture tubulaire permet, lorsque la pièce externe est introduite de sorte que son extrémité est située au niveau de la section la plus petite de l'ouverture tubulaire, de conserver un angle de collision sensiblement constant, ce qui permet de se maintenir plus longtemps dans la fenêtre de soudage du couple de matériau des pièces tubulaires à souder. La longueur de soudage entre les deux pièces est augmentée, améliorant ainsi la tenue mécanique de l'assemblage.

Un autre avantage de la bobine suivant l'invention réside dans le fait que les contraintes maximales, en termes de température et de déformation plastique, subies par la bobine, et générées par le passage du courant de très forte intensité dans la bobine, sont réduites. Un changement du profil de l'ouverture tubulaire de la bobine entraine un changement de la répartition de courant dans la zone active. En effet, un des paramètres entrant en jeu est la distance entre la surface périphérique de la bobine et la pièce externe. La densité de courant dans la partie active diminue avec l'augmentation de la distance entre la surface périphérique de la bobine et la pièce externe. La densité de courant étant en fait inversement proportionnelle à cette distance, le profil de l'ouverture tubulaire de la bobine selon l'invention permet ainsi d'augmenter la distance avec la zone de la bobine où la densité de courant était la plus élevée. Dans cette zone, les contraintes sont donc réduites. La durée de vie de la bobine est augmentée significativement.

Suivant des modes de mise en oeuvre préférés, l'invention répond en outre aux caractéristiques suivantes, mises en oeuvre séparément ou en chacune de leurs combinaisons techniquement opérantes.

Selon l'invention, l'ouverture tubulaire présente, sur la longueur axiale de la surface périphérique, deux tronçons tubulaires de section constante reliés entre eux par un tronçon tubulaire de section monotone croissante.

Selon des modes de réalisation préférés, pour réduire les déformations plastiques dans la bobine au cours du soudage des pièces tubulaires, la partie active comporte, de part et d'autre de la surface périphérique définissant l'ouverture tubulaire, une partie chanfreinée et/ou rayonnée.

Selon des modes de réalisation préférés, la bobine comporte un concentrateur de champ magnétique comprenant la partie active. Le concentrateur de champ magnétique est positionné entre la pièce externe et la surface périphérique de la bobine. La partie active est alors créée dans ledit concentrateur de champ magnétique.

Le concentrateur de champ magnétique est avantageusement une pièce interchangeable, et permet de conserver une même bobine pour plusieurs applications (changement de diamètre des pièces cylindriques, ...).

La bobine, selon au moins l'un de ses modes de réalisation, forme avec les pièces tubulaires, lorsque celles-ci sont en position au niveau de la bobine, un ensemble de soudage. Les deux pièces tubulaires sont de préférence disposées l'une dans l'autre de manière coaxiale et positionnées dans l'ouverture tubulaire de sorte que tout ou partie de la zone de recouvrement est en vis-à-vis de la partie active.

L'invention est également relative à un procédé de soudage par impulsion magnétique de deux pièces tubulaires. Le procédé comporte les étapes de :
- disposer les pièces tubulaires l'une par rapport à l'autre en formant une zone de travail, en vis-à-vis de la surface périphérique d'une bobine suivant au moins l'un de ses modes de réalisation, de sorte qu'une extrémité d'une des pièces est positionnée au niveau de la section la plus faible de l'ouverture tubulaire,
- soumettre la zone de travail à un champ magnétique de sorte qu'une pression s'exerce sur une paroi, dite extérieure, de l'une des pièces tubulaires et vient la plaquer étroitement contre une paroi, dite extérieure, de l'autre pièce tubulaire en provoquant leur liaison de façon permanente ; cette étape est dite étape de soudage.

Les deux pièces tubulaires sont positionnées l'une dans l'autre en formant la zone de recouvrement. Les deux pièces tubulaires sont disposées dans la bobine de sorte que la zone de travail située dans la zone de recouvrement est placée dans l'ouverture tubulaire de la bobine, en vis-à-vis de la surface périphérique.

Dans un exemple préféré de mise en oeuvre, la pièce la plus proche de la bobine, c'est-à-dire la pièce externe, est positionnée de sorte que son extrémité est placée au niveau de la section la plus faible de l'ouverture tubulaire.

Dans une forme préférée de mise en oeuvre, lorsque l'ouverture tubulaire présente, sur la longueur axiale de la surface périphérique, deux tronçons tubulaires de section constante reliés entre eux par un tronçon tubulaire de section monotone croissante, la pièce la plus proche de la bobine est positionnée de sorte que son extrémité est placée au niveau du tronçon tubulaire de section la plus faible.

Lors de l'étape de soudage, la zone de travail est soumise à un champ magnétique provenant de la partie active de la bobine de sorte qu'une pression s'exerce sur la paroi extérieure de la pièce tubulaire la plus proche de la bobine, et vient l'appliquer étroitement contre la paroi extérieure de l'autre pièce tubulaire en provoquant leur liaison de façon permanente.

Ainsi, lorsque la zone de travail est soumise au champ magnétique généré par la bobine assurant le soudage par pression, les deux pièces tubulaires viennent s'appliquer étroitement l'une contre l'autre par mise en vitesse et déformation de la pièce tubulaire la plus proche de la bobine en direction de l'autre pièce tubulaire.

Un tel procédé permet de maintenir, lors de l'étape de soudage, un angle de collision entre les deux pièces tubulaires sensiblement constant, ce qui permet de rester dans la fenêtre de soudage du couple de matériau constituant les pièces tubulaires à souder. Ainsi, la soudure réalisée est améliorée et la longueur de soudage est augmentée.

Un tel procédé permet également d'améliorer la tenue de la bobine aux contraintes thermiques et de déformations plastiques lors de l'étape de soudage.

### Présentation des figures

L'invention sera mieux comprise à la lecture de la description ci-après faite en référence aux dessins annexés :
La figure 1 représente schématiquement une vue en perspective d'une bobine pour soudage par impulsion magnétique, selon un mode de réalisation de l'invention,
La figure 2 représente schématiquement une vue de face de la bobine de la figure 1,
La figure 3 représente une coupe transversale de la bobine de la figure 2 selon la ligne AA, illustrant le profil d'une partie active de ladite bobine,
La figure 4 représente un agrandissement d'une partie du profil de la partie active de la bobine de la figure 3,
La figure 5 illustre une comparaison entre les distances de soudage obtenues par une bobine de l'art antérieur et une bobine selon un mode de réalisation de l'invention, pour un même couple de matériau,
Les figures 6a et 6b illustrent une comparaison entre des mesures de température générée dans une bobine de l'art antérieur et dans une bobine selon un mode de réalisation de l'invention.

### Description détaillée d'un mode de réalisation de l'invention

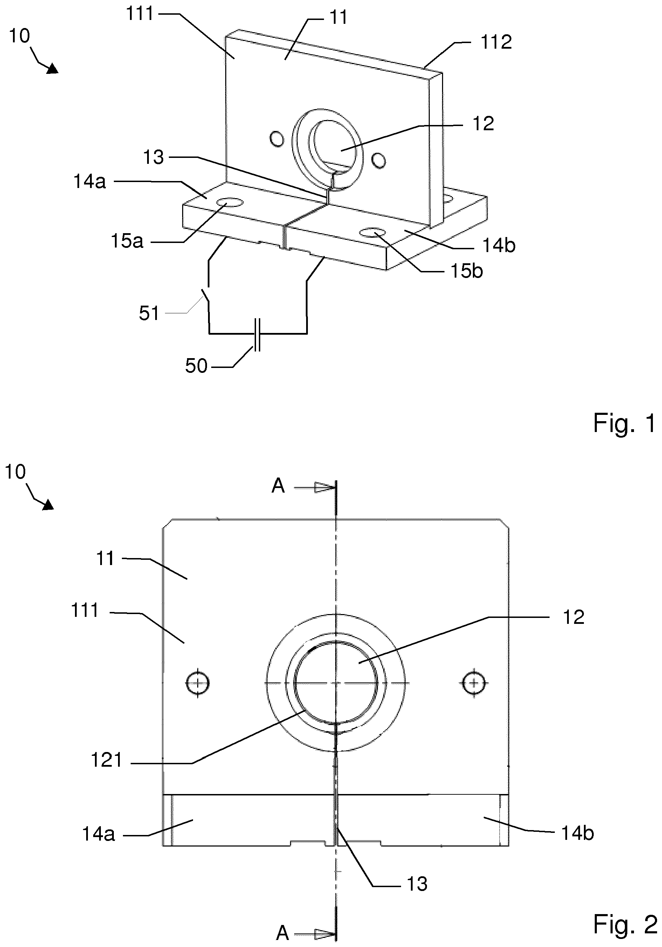

Les figures 1 à 4 illustrent une bobine 10 pour le soudage par impulsion magnétique des deux pièces tubulaires 20, 30, selon un premier mode de réalisation. Les deux pièces 20, 30 sont réalisées dans un matériau métallique.

Une telle bobine 10 fait partie intégrante d'un dispositif de soudage par impulsion magnétique qui comporte en outre une unité de stockage 50 et un ou plusieurs commutateurs 51.

L'unité de stockage 50 est configurée pour et destinée à emmagasiner une forte énergie, par exemple de l'ordre de quelques dizaines de kilojoules (kJ).

Dans un exemple préféré de réalisation, l'unité de stockage est une batterie de condensateurs de décharge.

La bobine est quant à elle configurée pour et destinée à créer un champ magnétique concentré dans un espace délimité, décrit ultérieurement.

Une première pièce tubulaire cylindrique, dite pièce externe 20, présente un diamètre sensiblement supérieur à un diamètre d'une seconde pièce tubulaire cylindrique, dite pièce interne 30, de sorte que la pièce interne 30 pénètre dans la pièce externe 20, avec un jeu.

Les deux pièces tubulaires cylindriques 20,30 sont destinées à être disposées l'une dans l'autre, de manière coaxiale, en formant, au niveau de leur superposition, une zone dite de recouvrement 25, puis à être soudées au niveau de tout ou partie de ladite zone de recouvrement par la bobine 10.

De préférence, la zone de recouvrement 25 est située au niveau d'une extrémité d'au moins une pièce, par exemple une extrémité de la pièce externe 20.

La bobine et les deux pièces tubulaires forment, lorsque lesdites deux pièces tubulaires sont en position au niveau de la bobine, un ensemble de soudage.

Dans un mode de réalisation non représenté, lorsque la pièce externe 20 est réalisée dans un matériau présentant une très faible conductivité électrique, tel que par exemple une pièce réalisée en acier, une pièce intermédiaire, dénommée pousseur, préférentiellement tubulaire cylindrique, est positionnée contre une paroi extérieure de la pièce externe. Cette pièce intermédiaire présente une bonne conductivité électrique.

On entend par matériau présentant une très faible conductivité électrique, un matériau dont la conductivité électrique est inférieure à 10 MS/m.

La bobine 10, généralement dénommée bobine annulaire, comporte un corps 11 dans lequel est pratiquée une ouverture tubulaire 12 délimitée par une surface dite périphérique 121. Ladite ouverture tubulaire est adaptée à recevoir les deux pièces 20,30 disposées l'une dans l'autre en vue de leur soudage.

Le corps 11 présente une première face latérale 111 et une seconde face latérale 112, opposée à ladite première face latérale.

Le corps 11 est réalisé dans un matériau présentant des caractéristiques spécifiques en termes, d'une part, de résistance mécanique à la déformation plastique pour y faire circuler un courant de très forte intensité, de l'ordre de quelques centaines de milliers d'Ampères et d'autre part de résistance à des températures élevées (c'est-à-dire une température de fusion élevée) pour ne pas fondre pendant le soudage.

Dans un exemple de réalisation, le matériau du corps est en acier.

Le corps 11 comporte en outre une fente 13, étroite, s'étendant radialement depuis l'ouverture tubulaire 12. Deux plaques de contact 14a, 14b, symétriquement opposées, s'étendent de part et d'autre de la fente 13.

Les plaques de contact 14a, 14b comportent des orifices traversants 15a, 15b pour le passage de moyens de fixation (non représentés) configurés pour fixer la bobine à une base (non représentée) reliée à l'unité de stockage d'énergie 50 et au(x) commutateur(s) 51.

Lorsque le(s) commutateur(s) 51 se ferme(nt), les plaques de contact 14a, 14b de la bobine 10 sont reliées à l'unité de stockage 50, et un courant de forte intensité circule dans la bobine 10 produisant un champ magnétique.

La bobine est conçue pour que la densité du courant dans une zone de la bobine, soit suffisante pour satisfaire les conditions de soudage. Cette zone est appelée partie active 125. Elle est par exemple décrite dans le document WO 2012/103873.

Dans le cas d'une bobine annulaire telle que décrite dans ce mode de réalisation, le courant circule à travers une des plaques de contact, puis dans la bobine 10 et ressort par l'autre plaque de contact. Ce courant est concentré, dans la partie active 125, sur une couche délimitée par la surface périphérique 121 en vis à vis d'une paroi extérieure de la pièce externe 20 et d'épaisseur correspondant à l'épaisseur de peau. Le courant génère, dans l'ouverture tubulaire 12, un champ magnétique concentré.

Dans l'exemple non limitatif d'une bobine réalisée en acier, l'épaisseur de peau est de l'ordre de quelques millimètres pour une fréquence de quelques dizaines de kHz.

Les deux pièces 20,30 sont avantageusement positionnées dans l'ouverture tubulaire de sorte que tout ou partie de la zone de recouvrement 25 est en vis-à-vis de la partie active 125.

La zone de recouvrement 25 en vis-à-vis de la partie active 125 est dénommée zone de travail. Ladite zone de travail présente une longueur prédéfinie, dite longueur de travail L_{wz}. Cette longueur de travail L_{wz} correspond à une longueur de soudage maximale entre la pièce interne et la pièce externe. En pratique, la longueur de soudage est sensiblement inférieure à cette longueur de travail.

Pour réaliser une soudure constante et comparable entre les deux pièces, sur tout le pourtour périphérique desdites deux pièces tubulaires cylindriques 20 et 30, l'ouverture tubulaire 12 est préférentiellement cylindrique, à l'instar desdites deux pièces tubulaires cylindriques à souder.

La pièce externe 20 présente un diamètre inférieur à un diamètre minimum de l'ouverture tubulaire 12.

La surface périphérique 121 présente une longueur axiale L_{b} dimensionnée de sorte à être au moins égale à la longueur de travail L_{wz} de la zone de travail.

L'ouverture tubulaire 12 présente avantageusement une section décroissante sur la longueur axiale L_{b} de la surface périphérique 121 de la bobine, dans une direction partant de la seconde face latérale 112 vers la première face latérale 111.

En d'autres termes, l'ouverture tubulaire 12 présente un diamètre qui diminue progressivement, dans une direction partant de la seconde face latérale 112 vers la première face latérale 111.

Dans un mode préféré de réalisation, l'ouverture tubulaire 12 présente, sur la longueur axiale L_{b} de la surface périphérique 121, une succession de trois tronçons, selon une direction partant de la seconde face latérale 112 vers la première face latérale 111 :
- un premier tronçon 122, de longueur L₁, présentant une section constante,
- un deuxième tronçon 123, de longueur L_{2,} présentant une section monotone décroissante,
- un troisième tronçon 124, de longueur L₃, présentant une section constante.

En d'autres termes, l'ouverture tubulaire présente un diamètre d₃, dans le troisième tronçon 124, inférieur à un diamètre d₁, dans le premier tronçon 122.

Le deuxième tronçon est défini par une pente d'angle β.

La section de l'ouverture tubulaire 12 dans le troisième tronçon 124 étant la section la plus petite, le niveau de l'intensité du courant circulant dans la bobine sera plus élevé dans ledit troisième tronçon. De plus, les lignes de champ magnétique sont plus resserrées et la pression magnétique est supérieure. Ainsi la portion de la pièce extérieure 20 située dans ce troisième tronçon 124 aura une accélération plus forte lors du procédé de soudage décrit ultérieurement.

A contrario, la section de l'ouverture tubulaire 12 dans le premier tronçon 122 étant la section la plus grande, la densité de courant circulant dans la bobine sera moins élevée dans le premier tronçon, ce qui va diminuer la pression magnétique dans ledit premier tronçon. De plus, la bobine est moins sollicitée mécaniquement et thermiquement dans ce premier tronçon.

Un tel profil d'ouverture tubulaire permet avantageusement de recourir à une unité de stockage délivrant à la bobine une énergie plus basse, ce qui améliore la tenue thermique et structurelle de ladite bobine. Une telle unité de stockage délivrant une énergie plus basse présente aussi un intérêt financier.

Un tel profil d'ouverture tubulaire permet également de limiter les sollicitations de la bobine au niveau de la troisième portion ce qui permet d'augmenter la durée de vie de la bobine.

Un tel profil d'ouverture tubulaire permet également avantageusement de modifier l'écart entre la bobine 10 et la pièce externe 20, ce qui a un impact sur les paramètres fondamentaux que sont la vitesse du point de collision et l'angle de collision. Un tel profil permet, lorsque la pièce externe 20 est introduite de sorte que son extrémité est située au niveau du troisième tronçon 124, dans la section la plus petite, de maintenir les paramètres fondamentaux dans la fenêtre de soudabilité du couple de matériaux constituant les pièces à souder plus longtemps. La qualité et l'efficacité de la soudure entre la pièce externe 20 et la pièce interne 30 sont ainsi améliorées.

Dans une forme préférée de réalisation, la longueur L₃ du troisième tronçon 124 est inférieure à la longueur L₁ du premier tronçon 122.

Dans un exemple préféré de réalisation, la longueur L₃ équivaut à 10% de la longueur axiale L_{b} de la surface périphérique 121, la longueur L₁ équivaut à 30% de la longueur axiale L_{b} de la surface périphérique 121 et la pente du deuxième tronçon 123 présente un angle β de 15°.

Une longueur L₃ réduite et une pente d'angle β prononcée reporte les sollicitations sur le troisième tronçon 124 de l'ouverture tubulaire 12.

Dans une autre forme préférée de réalisation, lorsqu'il est fait recours à un pousseur, la longueur L₃ du troisième tronçon 124 est équivalente à la longueur L₁ du premier tronçon 122.

Dans un exemple préféré d'une telle forme de réalisation, pour une bobine réalisée en acier, la longueur L₃ et la longueur L₁ sont équivalents à 20% de la longueur axiale L_{b} de la surface périphérique 121 et la pente du deuxième tronçon 123 présente un angle β de 10°.

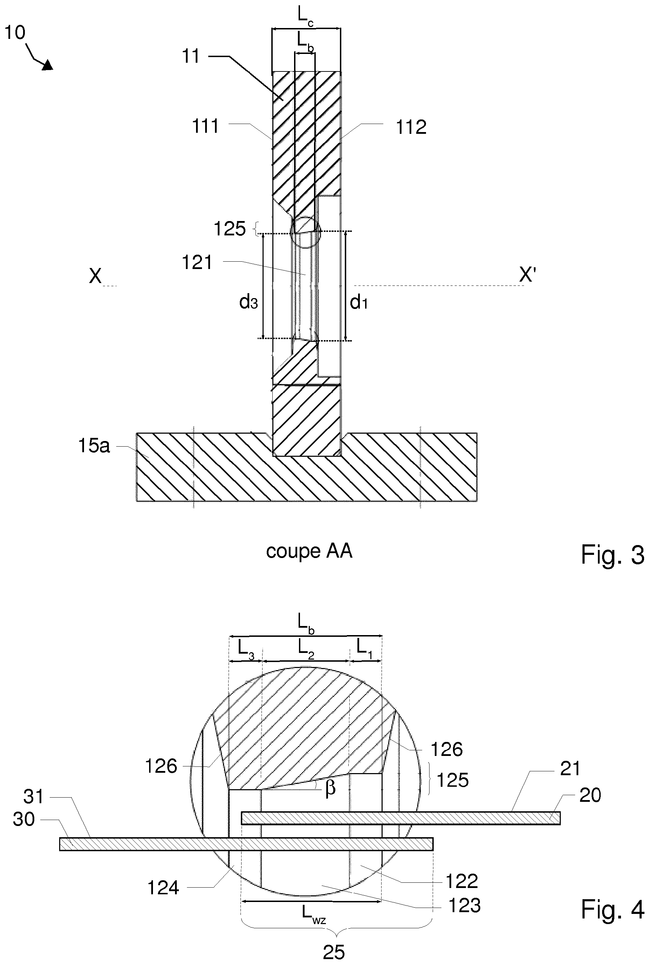

Dans un mode de réalisation illustré sur les figures 1 et 3, pour résister au courant circulant dans la bobine et renforcer ladite bobine, ledit corps présente une longueur L_{c}, entre la première 111 et la seconde face latérale 112, supérieure à la longueur axiale L_{b} de la surface périphérique 121.

Dans un autre mode de réalisation, pour réduire encore plus significativement les déformations plastiques de la bobine en cours de soudage, et par conséquent améliorer le maintien mécanique, la partie active 125 comporte, de part et d'autre de ladite surface périphérique de l'ouverture tubulaire, une partie chanfreinée 126.

Dans un autre mode de réalisation, pour supprimer les effets de pointe et/ou le pincement des lignes de champs magnétiques, l'ouverture tubulaire 12 comporte, de part et d'autre de la surface périphérique 121, un bord périphérique arrondi. Ainsi, la densité de courant est mieux répartie, ce qui évite une concentration de contraintes et aussi un pic de température.

Un exemple de procédé de soudage à partir d'une telle bobine est à présent décrit.

Pour souder deux pièces entre elles par impulsion magnétique, le procédé comporte une première étape de positionnement dans la bobine des deux pièces tubulaires cylindriques à souder.

Les deux pièces tubulaires cylindriques sont positionnées l'une dans l'autre en formant la zone de recouvrement.

Les deux pièces tubulaires cylindriques sont disposées dans la bobine 10 de sorte que la zone de travail est placée dans l'ouverture tubulaire de la bobine, en vis-à-vis de la partie active 125.

Les deux pièces tubulaires cylindriques sont maintenues, dans l'ouverture tubulaire, de manière coaxiale entre elles, selon une direction axiale XX' et avec l'ouverture tubulaire de la bobine, allongée selon ladite direction axiale XX', par des moyens de fixation (non représentés sur les figures).

Dans un exemple préféré de mise en oeuvre, la pièce externe 20 est positionnée de sorte que son extrémité est placée dans la section la plus faible de l'ouverture tubulaire 12, c'est-à-dire au niveau du troisième tronçon 124.

Le procédé comporte ensuite une étape de soudage par impulsion magnétique.

La zone de travail est soumise à un champ magnétique provenant de la partie active de la bobine de sorte qu'une pression s'exerce sur la paroi extérieure de la pièce externe, ou sur une paroi extérieure du pousseur lorsque ledit pousseur est nécessaire, et vient la plaquer étroitement contre une paroi extérieure de la pièce interne en provoquant leur liaison de façon permanente.

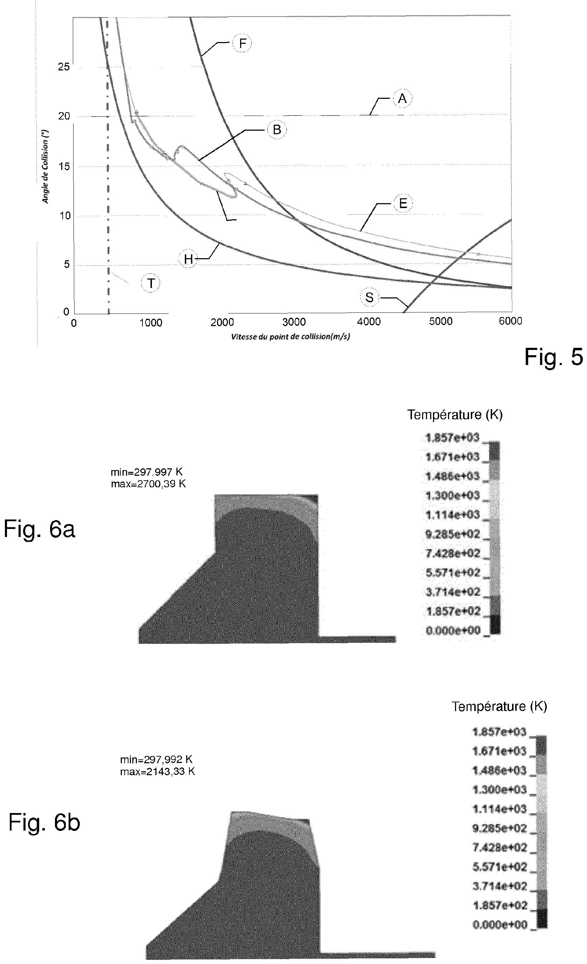

La figure 5 illustre les distances de soudage obtenues par une bobine de l'art antérieur et une bobine selon un mode de réalisation de l'invention, pour un même couple de matériau donné.

La bobine de l'état de l'art et la bobine selon un mode de réalisation de l'invention présentent les caractéristiques identiques suivantes :
- une ouverture tubulaire de diamètre 50 mm,
- la surface périphérique 121 présente une longueur axiale L_{b} de 8 mm,
- le matériau est en acier,
- la distance entre les deux pièces à souder est de 2 mm,
- la fréquence est de quelques dizaines de kiloHz.

La longueur de travail L_{wz} est identique à la longueur axiale L_{b} de la surface périphérique, soit 7mm.

L'ouverture tubulaire de la bobine de l'état de l'art est de section constante.

L'ouverture tubulaire de la bobine selon un mode de réalisation de l'invention présente :
∘ un premier tronçon, de longueur L₁ égale à 20 % de la longueur axiale L_{b} de la surface périphérique de la bobine, de diamètre 80 mm ;
∘ un troisième tronçon, de longueur L₃ égale à 20 % de la longueur axiale L_{b} de la surface périphérique de la bobine, de diamètre 80 mm ;
∘ un deuxième tronçon, présentant une pente d'angle β de 10°.

Pour un couple de matériaux donné pour les pièces tubulaires, quelque soit la forme de l'ouverture tubulaire de la bobine, la fenêtre de soudage est déterminée. Cette fenêtre de soudage est définie par les courbes subsonique (courbe S), hydrodynamique (courbe H), fusion (courbe F) et transition (courbe T). Une limite d'angle de collision, à 20°, est également indiquée (courbe A) sur la figure 5. De plus amples explications sur la fenêtre de soudage peuvent être trouvées dans le document « Explosive welding of aluminum to aluminum: analysis, computations and experiments », Grigno & all, International Journal of Impact Engineering 30 (2004) p.1333-1351.

Dans cette fenêtre de soudage, la courbe E représente l'évolution du couple (angle de collision, vitesse du point de collision) pour une bobine de l'état de l'art. La partie en gras E_{g} de la courbe E indique la distance soudée (presque cinq triangles représentant 5 mm de soudage). Sur cette distance soudée, l'angle de collision varie énormément, entre 15 et 20°, pouvant se répercuter sur la qualité de la soudure.

La courbe B représente l'évolution du couple (angle de collision, vitesse du point de collision) pour une bobine selon le mode de réalisation de l'invention choisi. Une telle bobine permet de souder une zone sur une distance de 6 mm (6 ronds). De plus, on constate que, sur une majorité de cette distance, l'angle de collision est maintenu à peu près constant, autour de 16°.

Les figures 6a et 6b illustrent les résultats de simulation du comportement en température d'une bobine de l'invention selon un premier mode de réalisation par rapport à une bobine de l'état de l'art.

La bobine de l'état de l'art présente les caractéristiques suivantes :
- une ouverture tubulaire, de section constante sur la longueur axiale de la surface périphérique, de diamètre 50 mm,
- la surface périphérique 121 présente une longueur axiale L_{b} de 8 mm,
- le matériau est en acier,
- la distance entre les deux pièces à souder est de quelques millimètres,
- la fréquence est de quelques dizaines de kHz.

La longueur de travail L_{wz} est identique à la longueur axiale L_{b} de la partie active, soit 8mm.

Les pièces tubulaires sont réalisées dans un matériau métallique, comme par exemple de l'aluminium, du cuivre ou de l'acier.

La bobine de l'invention selon un premier mode de réalisation présente les caractéristiques suivantes :
- la surface périphérique 121 présente une longueur axiale L_{b} de 8 mm,
- une ouverture tubulaire présentant :
   ∘ un premier tronçon, de longueur L₁ égale à 30% de la longueur axiale L_{b} de la surface périphérique de la bobine, de diamètre 50 mm ;
   ∘ un troisième tronçon, de longueur L₃ égale à 10% de la longueur axiale L_{b} de la surface périphérique de la bobine, de diamètre 50 mm ;
   ∘ un deuxième tronçon, présentant une pente d'angle β de 15°.
- le matériau de la bobine est en acier,
- la distance entre les deux pièces à souder est de quelques millimètres,
- la fréquence est de quelques dizaines d'kHz.

L'ouverture tubulaire de la bobine est chanfreinée de part et d'autre de la surface périphérique.

Les matériaux des pièces à souder sont en métal, comme par exemple de l'aluminium, du cuivre ou de l'acier, identiques ou différents.

La figure 6a représente une vue transversale d'une coupe radiale de la bobine de l'art antérieur. La figure 6a illustre le résultat de la simulation du comportement en température de la bobine de l'art antérieur.

La figure 6b représente une vue transversale d'une coupe radiale de la bobine selon le premier mode de réalisation. La figure 6b illustre le résultat de la simulation du comportement en température de la bobine selon le premier mode de réalisation.

On constate que la température maximale générée dans la bobine de l'art antérieur est de 2700 K tandis que la température maximale générée dans la bobine de l'invention selon le premier mode de réalisation est de 2143 K, ce qui représente un différentiel de température de l'ordre de 550 K.

On constate également que la température de la bobine de l'art antérieur est concentrée significativement sur un bord de la surface périphérique de la bobine tandis que la température de la bobine de l'invention selon le premier mode de réalisation est répartie sur les deux bords de la surface périphérique de la bobine.

La description ci-avant illustre clairement que par ses différentes caractéristiques et leurs avantages, la présente invention atteint les objectifs qu'elle s'était fixés. En particulier, elle fournit une bobine et un procédé de soudage par impulsion magnétique associé adaptés à la soudure de pièces en matériau à faible conductivité thermique. Elle présente avantageusement un profil au niveau de la surface périphérique 121 de l'ouverture tel que les contraintes thermiques et mécaniques appliquées sur la bobine en cours de soudage sont significativement diminuées, améliorant la durée de vie de la bobine. Une telle forme de bobine présente également une amélioration de la soudure entre les pièces.

## Revendications

1. Bobine (10) pour soudage de pièces tubulaires par impulsion magnétique comportant une partie active (125) dont une surface, dite périphérique (121), destinée à être positionnée en regard d'une zone de travail d'une zone de recouvrement (25) des pièces tubulaires entre elles, définit une zone sous la forme d'une ouverture tubulaire (12) allongée selon une direction axiale (XX'), et présente une longueur axiale (L_{b}) donnée,
**caractérisée en ce que** l'ouverture tubulaire (12) présente, dans la direction axiale (XX'), sur la longueur axiale (L_{b}) de la surface périphérique, deux tronçons (122, 124) de section constante reliés entre eux par un tronçon (123) de section monotone croissante.

2. Bobine selon la revendication 1 dans laquelle la partie active (125) comporte, de part et d'autre de la surface périphérique (121) définissant l'ouverture tubulaire (12), une partie chanfreinée (126) et/ou rayonnée.

3. Bobine selon l'une des revendications précédentes comportant un concentrateur de champ magnétique comprenant la partie active.

4. Ensemble de soudage comportant une bobine conforme à l'une des revendications 1 à 3 et deux pièces tubulaires, de préférence disposées l'une dans l'autre de manière coaxiale, en position au niveau de la bobine, de préférence positionnées dans l'ouverture tubulaire (12) de sorte que tout ou partie de la zone de recouvrement (25) est en vis-à-vis de la partie active (125).

5. Procédé de soudage par impulsion magnétique de deux pièces tubulaires, **caractérisé en ce que** le procédé comporte les étapes de :
- disposer les pièces tubulaires l'une par rapport à l'autre en formant une zone dite de travail, en vis-à-vis de la surface périphérique (121) d'une bobine conforme à l'une des revendications 1 à 3, de sorte qu'une extrémité d'une des pièces est positionnée au niveau de la section la plus faible de l'ouverture tubulaire (12),
- soumettre la zone de travail à un champ magnétique de sorte qu'une pression s'exerce sur une paroi de l'une des pièces tubulaires et vient la plaquer étroitement contre une paroi de l'autre pièce tubulaire en provoquant leur liaison de façon permanente.

6. Procédé de soudage par impulsion magnétique selon la revendication 5 dans lequel les pièces tubulaires, dénommées pièce interne (30) et pièce externe (20), sont disposées de sorte que l'extrémité de la pièce externe (20) est positionnée au niveau de la section la plus faible de l'ouverture tubulaire (12).

## Patentansprüche

1. Spule (10) zum Magnetimpulsschweißen von rohrförmigen Teilen, umfassend einen aktiven Teil (125), dessen eine Fläche, Umfangsfläche (121) genannt, die dazu bestimmt ist, gegenüber einer Arbeitszone einer Überlappungszone (25) der rohrförmigen Teile untereinander positioniert zu sein, eine Zone in Form einer rohrförmigen Öffnung (12), die sich in eine Axialrichtung (XX') erstreckt und eine gegebene axiale Länge (L_{b}) aufweist, definiert,
**dadurch gekennzeichnet, dass** die rohrförmige Öffnung (12) in Axialrichtung (XX') auf der axialen Länge (L_{b}) der Umfangsfläche zwei Abschnitte (122, 124) mit konstantem Querschnitt aufweist, die miteinander durch einen Abschnitt (123) mit monoton steigendem Querschnitt verbunden sind.

2. Spule nach Anspruch 1, bei der der aktive Teil (125) beiderseits der Umfangsfläche (121), die die rohrförmige Öffnung (12) definiert, einen abgeschrägten und/oder gerillten Teil (126) umfasst.

3. Spule nach einem der vorhergehenden Ansprüche, umfassend Magnetfeldkonzentrator, umfassend den aktiven Teil.

4. Schweißanordnung, umfassend eine Spule nach einem der Ansprüche 1 bis 3 und zwei rohrförmige Teile, die vorzugsweise koaxial ineinander auf Höhe der Spule vorzugsweise in der rohrförmigen Öffnung (12) positioniert sind, so dass die Gesamtheit oder ein Teil der Überlappungszone (25) gegenüber dem aktiven Teil (125) angeordnet ist.

5. Magnetimpulsschweißverfahren von zwei rohrförmigen Teilen, **dadurch gekennzeichnet, dass** das Verfahren die folgenden Schritte umfasst:
- Anordnen der rohrförmigen Teile in Bezug zueinander, wobei eine so genannte Arbeitszone gegenüber der Umfangsfläche (121) einer Spule nach einem der Ansprüche 1 bis 3 gebildet wird, so dass ein Ende eines der Teile auf Höhe des kleinsten Querschnitts der rohrförmigen Öffnung (12) positioniert ist,
- Aussetzen der Arbeitszone einem Magnetfeld, so dass ein Druck auf eine Wand eines der rohrförmigen Teile ausgeübt wird und sie fest gegen eine Wand des anderen rohrförmigen Teils drückt, wobei ihre dauerhafte Verbindung hervorgerufen wird.

6. Magnetimpulsschweißverfahren nach Anspruch 5, bei dem die rohrförmigen Teile, internes Teil (30) und externes Teil (20) genannt, derart angeordnet sind, dass das externe Teil (20) auf Höhe des kleinsten Querschnitts der rohrförmigen Öffnung (12) positioniert ist.

## Claims

1. Coil (10) for the magnetic-pulse welding of tubular parts comprising an active portion (125) of which a surface, called peripheral surface (121), intended to be positioned facing a working zone of a mutual overlap zone (25) of the tubular parts, defines a zone in the form of a tubular aperture (12) elongate in an axial direction (XX'), and has a given axial length (L_{b}), **characterized in that** the tubular aperture (12) has, in the axial direction (XX'), over the axial length (L_{b}) of the peripheral surface, two sections (122, 124) of constant cross section linked together by a section (123) of monotonically increasing cross section.

2. Coil according to Claim 1, wherein the active portion (125) comprises, on either side of the peripheral surface (121) defining the tubular aperture (12), a chamfered and/or shelved portion (126).

3. Coil according to one of the preceding claims, comprising a magnetic field concentrator comprising the active portion.

4. Welding set comprising a coil according to one of Claims 1 to 3 and two tubular parts, preferably arranged one inside the other coaxially, in position at the level of the coil, preferably positioned in the tubular aperture (12) such that all or part of the overlap zone (25) is facing the active portion (125).

5. Method for the magnetic-pulse welding of two tubular parts, **characterized in that** the method comprises the steps of:
- arranging the tubular parts relative to one another to form a so-called working zone, facing the peripheral surface (121) of a coil according to one of Claims 1 to 3, such that an end of one of the parts is positioned at the level of the smallest cross section of the tubular aperture (12),
- subjecting the working zone to a magnetic field such that a pressure is exerted on a wall of one of the tubular parts and pressing it closely against a wall of the other tubular part to provoke the permanent bonding thereof.

6. Magnetic-pulse welding method according to Claim 5, wherein the tubular parts, called inner part (30) and outer part (20), are arranged such that the end of the outer part (20) is positioned at the level of the smallest section of the tubular aperture (12).
